# FASCICULE DE BREVET EUROPEEN

(11) **EP 2 073 127 B1**
(45) Date de publication et mention de la délivrance du brevet: **16.11.2011**
(21) Numéro de dépôt: 08171344.8
(22) Date de dépôt: 11.12.2008
(51) Int. Cl.: G06F 13/38

(54) **Procédé et dispositif de communication entre plusieurs interfaces de connexion**
Verfahren und Vorrichtung zur Kommunikation zwischen mehreren Verbindungsschnittstellen
Method and device for communication between several connection interfaces

(30) Priorité: 18.12.2007 FR 0759931
(43) Date de publication de la demande: 24.06.2009
(73) Titulaire: Alcatel Lucent, 75007 Paris (FR)
(72) Inventeur: Lazar, Marius, 78141 VELIZY (FR); Froment, Thomas, Route de Villejust 91620 NOZAY (FR)
(74) Mandataire: Nicolle, Olivier

(56) Documents cités:
- US-B1- 6 609 161

## Description

La présente invention se rapporte à la communication entre plusieurs interfaces de connexion dans un réseau de communication.

Elle trouve une application dans tout processus qui reçoit des messages ou données en provenance de plusieurs sources via des réseaux de communication de type Internet et fonctionnant selon des protocoles tels que TCP (« Transport Control Protocol ») ou équivalents.

Généralement, une interface de connexion, appelée encore « socket » en anglo-saxon, comprend une liste-réception répertoriant des mémoires tampon contenant le flux de données reçues et une liste-émission répertoriant des mémoires tampons contenant le flux de données à émettre.

Les liste-réception et liste-émission sont dites « doublement chainées » dans la mesure où les mémoires tampon qui les constituent possèdent chacune une structure comprenant un pointeur-précédent indiquant la mémoire tampon qui précède la mémoire tampon courante dans la liste correspondante et un second pointeur-suivant indiquant la mémoire tampon qui suit la mémoire tampon courante dans la liste correspondante.

Avec une seule interface de connexion le processus peut recevoir les messages ou les données en attendant leur arrivée dans la liste-réception de ladite interface.

Avec plusieurs interfaces de connexion il est nécessaire d'exécuter d'abord une analyse cyclique des listes-réception pour retrouver les interfaces de connexion ayant reçu des messages destinés à être lus.

Plusieurs solutions connues, notamment celles dénommées « select », « poll », « kqueue », « epoll » sont proposées pour mettre en oeuvre cette d'analyse (US-B1-6,609,161).

Ces solutions connues sont relativement satisfaisantes mais ne tiennent pas compte de l'ordre d'arrivée des messages et impliquent un travail supplémentaire.

Il en résulte une dégradation importante des performances du réseau, cette dégradation étant d'autant plus importante que le nombre de sockets à lire est grand, par exemple supérieur à 1000.

La présente invention remédie à cet inconvénient.

Elle porte sur un dispositif de communication entre plusieurs interfaces de connexion dans un réseau de communication dans lequel chaque interface de connexion comprend une liste-réception répertoriant des mémoires tampon contenant le flux de données reçues, lesdites mémoires tampon ayant chacune une structure comprenant un pointeur-précédent indiquant la mémoire tampon qui précède la mémoire tampon courante dans la liste réception correspondante et un second pointeur-suivant indiquant la mémoire tampon qui suit la mémoire tampon courante dans la liste réception correspondante.

Selon une définition générale de l'invention, l'une des interfaces de connexion est désignée apte à recevoir le flux de données reçues par chaque interface de connexion associée à un processus choisi,
ladite interface de connexion ainsi désignée comprend en outre une liste-réception supplémentaire répertoriant des mémoires tampons contenant le flux de données reçues par l'ensemble des interfaces de connexion participant à un processus choisi, et
les mémoires tampon de chaque interface de connexion appartiennent en même temps aux deux listes réception et comprennent chacune en outre un pointeur-précédent supplémentaire indiquant la mémoire tampon qui précède la mémoire tampon courante dans la liste-réception supplémentaire et un pointeur-suivant supplémentaire indiquant la mémoire tampon qui suit la mémoire tampon courante dans la liste réception supplémentaire.

Ainsi, le dispositif selon l'invention permet au niveau de l'interface de connexion ainsi désignée d'accéder au flux de données reçues par l'ensemble des interfaces de connexion participant audit processus, et cela dans l'ordre d'arrivée dudit flux de données reçues.

Il en résulte une amélioration des performances du réseau par rapport aux structures antérieures.

La présente invention a également pour objet un procédé de communication mis en oeuvre par le dispositif selon l'invention.

D'autres caractéristiques et avantages de l'invention apparaîtront à la lumière de la description détaillée ci-après et des dessins dans lesquels :
- la **figure 1** illustre schématiquement un dispositif de communication équipé d'une interface de connexion désignée conforme à l'invention ; et
- la **figure 2** illustre schématique une structure d'une mémoire tampon conforme à l'invention.

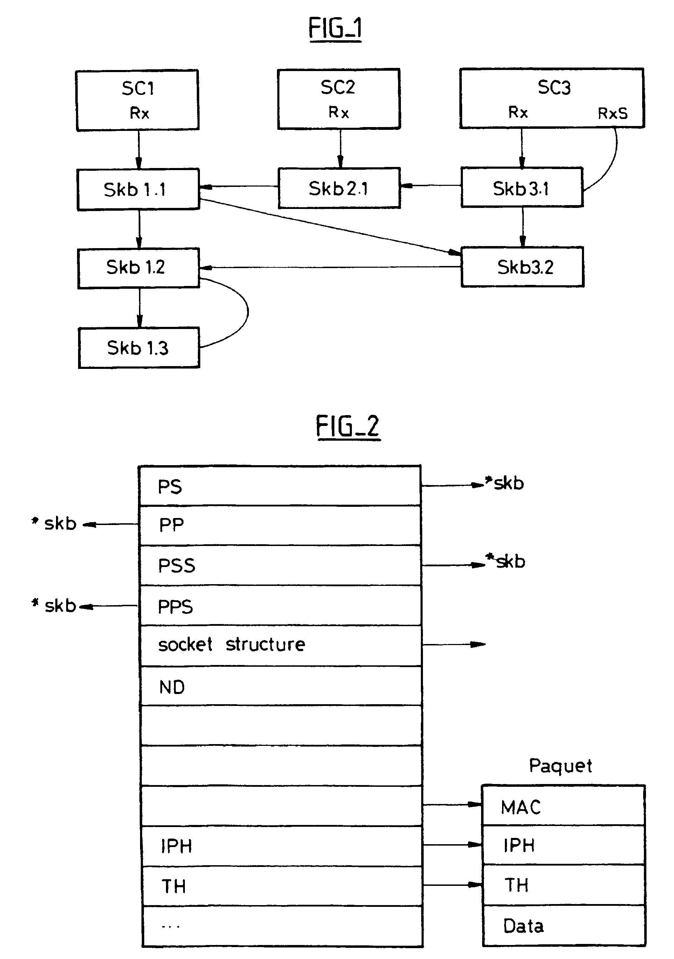

En référence à la **figure 1****,** on a représenté un processus de type messagerie TCP/IP.

Un tel processus reçoit des messages en provenance de plusieurs sources via un réseau de communication fonctionnant sous le protocole de type TCP.

A chaque source est associée une interface de connexion SC, individualisée en SC1, SC2 et SC3.

Chaque interface de connexion SC comprend une liste-réception RX répertoriant des mémoires tampon SKB contenant le flux de données reçues.

Chaque interface de connexion comprend également une liste-émission (non représentée) répertoriant des mémoires tampons contenant le flux de données à émettre.

En référence à la **figure 2****,** la structure de la liste réception RX est telle que chaque mémoire tampon SKB comprend un pointeur-précédent PP indiquant la mémoire tampon SKB qui précède la mémoire tampon courante dans la liste correspondante et un second pointeur-suivant PS indiquant la mémoire tampon qui suit la mémoire tampon courante dans la liste correspondante.

Les mémoires tampons sont chainées entre elles pour une interface de connexion choisie.

Chaque mémoire tampon SKB identifie la structure du dispositif ND pour lequel le paquet de données est envoyé ou à partir duquel le paquet de données est reçu.

A chaque paquet est associé une mémoire tampon ou buffer SKB. Les en têtes des paquets sont correctement localisés par l'intermédiaire d'un jeu de pointeurs TH, IPH et MAC.

Les buffers sont chaînés pour une interface de connexion donnée et contiennent des informations telles que les liens aux en tête des protocoles, le dispositif associé au paquet.

On fait à nouveau référence à la **figure 1****.**

L'interface de connexion SC3 est désignée à recevoir aussi le flux de données reçues de chaque interface de connexion SC1, SC2 et SC3 associées à un processus choisi, par exemple le processus de messagerie.

L'interface de connexion SC3 comprend une liste-réception supplémentaire RXS répertoriant des mémoires tampons SKB contenant le flux de données reçues par l'ensemble des interfaces de connexion participant audit processus.

On fait à nouveau référence à la **figure 2****,**

Les mémoires tampon SKB de chaque interface de connexion SC1, SC2, SC3 appartiennent en même temps aux deux listes réception RX, et RXS.

Les mémoires tampon SKB comprennent chacune en outre un pointeur-précédent supplémentaire PPS indiquant la mémoire tampon qui précède la mémoire tampon courante dans la liste-réception supplémentaire RXS et un pointeur-suivant supplémentaire PSS indiquant la mémoire tampon qui suit la mémoire tampon courante dans la liste réception supplémentaire RXS.

Au niveau de l'interface de connexion ainsi désignée SC3, il est possible d'accéder au flux de données reçues par l'ensemble des interfaces de connexion participant audit processus, et cela dans l'ordre d'arrivée dudit flux de données reçues.

En effet, la liste réception supplémentaire RXS contient les informations de pointage permettant de retrouver les flux de données reçues selon l'ordre d'arrivée de ces données dans les différentes interfaces de connexion.

Par exemple, en référence à la **figure 1****,** l'ordre d'arrivée des flux de données reçues est le suivant :
Skb 3.1
Skb 2.1
Skb 1.1
Skb 3.2
Skb 1.2
Skb 1.3

Grâce à la liste réception supplémentaire RXS, il est possible d'accéder aux flux de données selon cet ordre tandis qu'en l'absence de la liste de réception supplémentaire, l'accès serait en fonction du rang de l'interface de connexion, c'est à dire d'abord l'interface de connexion SC1 puis l'interface de connexion SC2 et après SC3. Dans ce cas l'ordre de traitement des flux de données serait :
Skb 1.1
Skb 1.2
Skb 1.3
Skb 2.1
Skb 3.1
Skb 3.2

## Revendications

1. Dispositif de communication entre plusieurs interfaces de connexion (SC1, SC2, SC3) dans un réseau de communication dans lequel chaque interface de connexion (SC1,SC2, SC3) comprend une liste-réception (RX) répertoriant des mémoires tampon (SKB) contenant le flux de données reçues, ladite liste-réception (RX) ayant une structure selon laquelle chaque mémoire tampon (SKB) comprend un pointeur-précédent (PP) indiquant la mémoire tampon qui précède la mémoire tampon courante dans la liste réception correspondante et un second pointeur-suivant (PS) indiquant la mémoire tampon qui suit la mémoire tampon courante dans la liste réception correspondante,
**caractérisé en ce que** l'une (SC3) des interfaces de connexion (SC) est désignée apte à recevoir le flux de données reçues par chaque interface de connexion associée à un processus choisi,
**en ce que** ladite interface de connexion ainsi désignée (SC3) comprend en outre une liste-réception supplémentaire (RXS) répertoriant des mémoires tampons contenant le flux de données reçues par l'ensemble des interfaces de connexion participant à un processus choisi, et
**en ce que** les mémoires tampon (SKB) de chaque interface de connexion (SC1,SC2,SC3) appartiennent en même temps aux deux listes réception (RX, et RXS) et comprennent chacune en outre un pointeur-précédent supplémentaire (PPS) indiquant la mémoire tampon qui précède la mémoire tampon courante dans la liste-réception supplémentaire (RXS) et un pointeur-suivant supplémentaire (PSS) indiquant la mémoire tampon qui suit la mémoire tampon courante dans la liste réception supplémentaire (RXS),
ce qui permet d'accéder au flux de données reçues par l'ensemble des interfaces de connexion participant audit processus, dans l'ordre d'arrivée dudit flux de données reçues.

2. Procédé de communication entre plusieurs interfaces de connexion (SC1, SC2, SC3) dans un réseau de communication dans lequel chaque interface de connexion (SC1,SC2, SC3) comprend une liste-réception (RX) répertoriant des mémoires tampon (SKB) contenant le flux de données reçues, ladite liste-réception (RX) ayant une structure selon laquelle chaque mémoire tampon (SKB) comprend un pointeur-précédent (PP) indiquant la mémoire tampon qui précède la mémoire tampon courante dans la liste réception correspondante et un second pointeur-suivant (PS) indiquant la mémoire tampon qui suit la mémoire tampon courante dans la liste réception correspondante,
**caractérisé en ce que** l'une (SC3) des interfaces de connexion (SC) est désignée apte à recevoir le flux de données reçues par chaque interface de connexion associée à un processus choisi,
**en ce que** ladite interface de connexion ainsi désignée (SC3) comprend en outre une liste-réception supplémentaire (RXS) répertoriant des mémoires tampons contenant le flux de données reçues par l'ensemble des interfaces de connexion participant à un processus choisi, et
**en ce que** les mémoires tampon (SKB) de chaque interface de connexion (SC1,SC2,SC3) appartiennent en même temps aux deux listes réception (RX, et RXS) et comprennent chacune en outre un pointeur-précédent supplémentaire (PPS) indiquant la mémoire tampon qui précède la mémoire tampon courante dans la liste-réception supplémentaire (RXS) et un pointeur-suivant supplémentaire (PSS) indiquant la mémoire tampon qui suit la mémoire tampon courante dans la liste réception supplémentaire (RXS),
ce qui permet d'accéder au flux de données reçues par l'ensemble des interfaces de connexion participant audit processus, dans l'ordre d'arrivée dudit flux de données reçues.

## Claims

1. A communication device for communication between multiple connection interfaces (SC1, SC2, SC3) within a communication network wherein each connection interface (SC1, SC2, SC3) comprises a received-list (RX) listing buffer memories (SKB) containing the flow of data received, said received-list (RX) having a structure according to which each buffer memory (SKB) comprises a previous-pointer (PP) indicating the buffer memory that precedes the current buffer memory in the corresponding received-list and a second next-pointer (PS) indicating the buffer memory that follows the current buffer memory in the corresponding received-list,
**characterized in that** one (SC3) of the connection interfaces (SC) is designated as capable to receive the flow of data received by each connection interface associated with a chosen process,
**in that** said connection interface thereby designated (SC3) further comprises an additional received-list (RXS) listing buffer memories containing the flow of data received by the set of connection interfaces participating in a chosen process, and
**in that** the buffer memories (SKB) of each connection interface (SC1,SC2,SC3) simultaneously belong to both of the received-lists (RX, and RXS), and each further comprise an additional previous-pointer (PPS) indicating the buffer memory that proceeds the current buffer memory in the additional received-list (RXS) and an additional next-pointer (PSS) indicating the buffer memory that follows the current buffer memory in the additional received-list (RXS),
which makes it possible to access the flow of data received by the set of connection interfaces participating in said process, in the order that said flow of received data arrives.

2. A communication method for communication between multiple connection interfaces (SC1, SC2, SC3) within a communication network wherein each connection interface (SC1, SC2, SC3) comprises a received-list (RX) listing buffer memories (SKB) containing the flow of data received, said received-list (RX) having a structure according to which each buffer memory (SKB) comprises a previous-pointer (PP) indicating the buffer memory that precedes the current buffer memory in the corresponding received-list and a second next-pointer (PS) indicating the buffer memory that follows the current buffer memory in the corresponding received-list,
**characterized in that** one (SC3) of the connection interfaces (SC) is designated as capable to receive the flow of data received by each connection interface associated with a chosen process,
**in that** said connection interface thereby designated (SC3) further comprises an additional received-list (RXS) listing buffer memories containing the flow of data received by the set of connection interfaces participating in a chosen process, and
**in that** the buffer memories (SKB) of each connection interface (SC1,SC2,SC3) simultaneously belong to both of the received-lists (RX, and RXS), and each further comprise an additional previous-pointer (PPS) indicating the buffer memory that proceeds the current buffer memory in the additional received-list (RXS) and an additional next-pointer (PSS) indicating the buffer memory that follows the current buffer memory in the additional received-list (RXS),
which makes it possible to access the flow of data received by the set of connection interfaces participating in said process, in order that said flow of received data arrives.

## Patentansprüche

1. Vorrichtung zur Kommunikation zwischen mehreren Sockets (SC1, SC2, SC3) in einem Kommunikationsnetzwerk, in welchem jedes Socket (SC1, SC2, SC3) eine Eingangsliste (RX), in welcher Pufferspeicher (SKB) mit dem empfangenen Datenfluss verzeichnet sind, umfasst, wobei die besagte Eingangsliste (RX) eine Struktur aufweist, gemäß welcher jeder Pufferspeicher (SKB) einen Zuvor-Zeiger (PP), welcher den dem in der entsprechenden Eingangsliste momentanen Pufferspeicher vorangehenden Pufferspeicher angibt, und einen zweiten Danach-Zeiger (PS), welcher den dem in der entsprechenden Eingangsliste momentanen Pufferspeicher folgenden Pufferspeicher angibt, umfasst,
**dadurch gekennzeichnet, dass** eines (SC3) der Sockets (SC) als dazu geeignet bestimmt wird, den an jedem mit einem ausgewählten Vorgang assoziierten Socket empfangenen Datenfluss zu empfangen,
dass das besagte derart bestimmte Socket (SC3) weiterhin eine zusätzliche Eingangsliste (RXS) umfasst, in welcher Pufferspeicher mit den an allen an einem ausgewählten Vorgang beteiligten Sockets empfangenen Datenflüssen verzeichnet sind, und
dass die Pufferspeicher (SKB) eines jeden Sockets (SC1, SC2, SC3) gleichzeitig den beiden Eingangslisten (RX, und RXS) angehören und jeweils weiterhin einen zusätzlichen Zuvor-Zeiger (PPS), welcher den dem momentanen Pufferspeicher in der zusätzlichen Eingangsliste (RXS) vorangehenden Pufferspeicher angibt, und einen zusätzlichen Danach-Zeiger (PSS), welcher den dem momentanen Pufferspeicher in der zusätzlichen Eingangsliste (RXS) folgenden Pufferspeicher angibt, umfasst,
wodurch es möglich ist, auf die an allen an dem besagten Vorgang beteiligten Sockets empfangenen Datenflüsse in der Reihenfolge der Ankunft der besagten Datenflüsse zuzugreifen.

2. Verfahren zur Kommunikation zwischen mehreren Sockets (SC1, SC2, SC3) in einem Kommunikationsnetzwerk, in welchem jedes Socket (SC1, SC2, SC3) eine Eingangsliste (RX), in welcher Pufferspeicher (SKB) mit dem empfangenen Datenfluss verzeichnet sind, umfasst, wobei die besagte Eingangsliste (RX) eine Struktur aufweist, gemäß welcher jeder Pufferspeicher (SKB) einen Zuvor-Zeiger (PP), welcher den dem in der entsprechenden Eingangsliste momentanen Pufferspeicher vorangehenden Pufferspeicher angibt, und einen zweiten Danach-Zeiger (PS), welcher den dem in der entsprechenden Eingangsliste momentanen Pufferspeicher folgenden Pufferspeicher angibt, umfasst,
**dadurch gekennzeichnet, dass** eines (SC3) der Sockets (SC) als dazu geeignet bestimmt wird, den an jedem mit einem ausgewählten Vorgang assoziierten Socket empfangenen Datenfluss zu empfangen,
dass das besagte derart bestimmte Socket (SC3) weiterhin eine zusätzliche Eingangsliste (RXS) umfasst, in welcher Pufferspeicher mit den an allen an dem ausgewählten Vorgang beteiligten Sockets empfangenen Datenflüssen verzeichnet sind, und
dass die Pufferspeicher (SKB) eines jeden Sockets (SC1, SC2, SC3) gleichzeitig den beiden Eingangslisten (RX, und RXS) angehören und jeweils weiterhin einen zusätzlichen Zuvor-Zeiger (PPS), welcher den dem momentanen Pufferspeicher in der zusätzlichen Eingangsliste (RXS) vorangehenden Pufferspeicher angibt, und einen zusätzlichen Danach-Zeiger (PSS), welcher den dem momentanen Pufferspeicher in der zusätzlichen Eingangsliste (RXS) folgenden Pufferspeicher angibt, umfasst,
wodurch es möglich ist, auf die an allen an dem besagten Vorgang beteiligten Sockets empfangenen Datenflüsse in der Reihenfolge der Ankunft der besagten Datenflüsse zuzugreifen.
